# EUROPÄISCHE PATENTSCHRIFT

(11) **EP 1 062 538 B1**
(45) Veröffentlichungstag und Bekanntmachung des Hinweises auf die Patenterteilung: **27.08.2003**
(21) Anmeldenummer: 99915561.7
(22) Anmeldetag: 10.03.1999
(51) Int. Cl.: G02B 26/08, G02B 27/09

(54) **ABLENKVORRICHTUNG FÜR ELEKTROMAGNETISCHE STRAHLEN ODER STRAHLBÜNDEL IM OPTISCHEN SPEKTRALBEREICH**
DEVICE FOR DEVIATING ELECTROMAGNETIC RAYS OR RADIATION BEAMS IN THE OPTICAL SPECTRAL DOMAIN
DISPOSITIF DE DEVIATION POUR RAYONS OU FAISCEAUX DE RAYONS ELECTROMAGNETIQUES DANS LE DOMAINE SPECTRAL OPTIQUE

(30) Priorität: 10.03.1998 DE 19810245; 24.04.1998 DE 19818531
(43) Veröffentlichungstag der Anmeldung: 27.12.2000
(73) Patentinhaber: Hentze-Lissotschenko Patentverwaltungs GmbH & Co.KG, 25870 Norderfriedrichskoog (DE)
(72) Erfinder: Hentze-Lissotschenko Patentverwaltungs GmbH & Co.KG, 25870 Norderfriedrichskoog (DE)
(74) Vertreter: Basfeld, Rainer, Dr. Dipl.-Phys.
(86) Internationale Anmeldenummer: EP9901546
(87) Internationale Veröffentlichungsnummer: WO99046625

(56) Entgegenhaltungen:
- EP-A- 0 363 347
- DE-A- 19 514 626
- DE-A- 19 610 881
- US-A- 4 299 446
- US-A- 5 045 679
- US-A- 5 390 024
- US-A- 5 689 521

## Beschreibung

Die vorliegende Erfindung betrifft eine Ablenkvorrichtung für elektromagnetische Strahlen oder Strahlbündel im optischen Spektralbereich gemäß dem Oberbegriff des Anspruchs 1.

Als Ablenkvorrichtung der vorgenannten Art können beispielsweise vielflächige rotierbare Spiegel Verwendung finden. Weiterhin besteht die Möglichkeit, Matrizen aus Zylinderlinsen zur Strahlablenkung zu benutzen. Um mit derartigen Matrizen einen Strahl in zwei zueinander senkrechte Richtungen abzulenken, sind jedoch zwei Matrizen aus Zylinderlinsen pro Ablenkrichtung erforderlich, so daß für eine Ablenkung in zwei voneinander unabhängige Richtungen insgesamt vier Matrizen aus Zylinderlinsen benötigt werden. Beide vorbeschriebenen Ablenkvorrichtungen gemäß dem Stand der Technik sind kompliziert aufgebaut und nur mit relativ großem Aufwand herstellbar.

Eine Vorrichtung der eingangs genannten Art ist aus der US-Patentschrift US 5,045,679 A bekannt. Die darin beschriebene Ablenkvorrichtung dient zur kontrollierten Ablenkung eines Laserstrahls auf eine Werkstückoberfläche. Als Ablenkelemente werden dabei zwei in dem Strahlengang angeordnete Prismen verwendet, die derart verschwenkt werden können, dass dadurch der Auftreffpunkt des Laserstrahls auf der Werkstückoberfläche in zwei in der Fläche liegenden zueinander senkrechten Richtungen verschoben werden kann.

Aus der US-Patentschrift US 5,390,024 A ist ein Entfernungsmeßsystem für Bildverarbeitungsanwendungen bekannt. In dem Entfernungsmeßsystem findet ein Ablenkelement Verwendung, das auf einer Seite eine tordierte, helixähnliche oder schraubenähnliche Oberfläche aufweist. Vor diesem Ablenkelement sind zwei miteinander fluchtende horizontal angeordnete Schlitze angeordnet, durch die das Licht aus dem betrachteten Ausschnitt auf das Ablenkelement auftreffen kann. Das aus dem Ablenkelement austretende Licht wird vermittels einer Linse in einer Ausgangsabbildungsebene fokussiert.

Das der vorliegenden Erfindung zugrundeliegende Problem ist die Schaffung einer Ablenkvorrichtung der eingangs genannten Art, die unkomplizierter und kostengünstiger aufgebaut ist.

Dies wird erfindungsgemäß durch die kennzeichnenden Merkmale der Ansprüche 1, 5, 14 und 24 erreicht.

Erfindungsgemäß ist die optisch funktionale Grenzfläche derart gekrümmt, daß sich längs einer im wesentlichen in der optisch funktionalen Grenzfläche liegenden ersten Richtung die lokale Neigung der optisch funktionalen Grenzfläche bezüglich einer im wesentlichen in der optisch funktionalen Grenzfläche liegenden, zur ersten Richtung etwa senkrechten Richtung zumindest abschnittsweise stetig ändert. Durch die stetige Änderung der Neigung der optisch funktionalen Grenzfläche in einer Richtung bezüglich der dazu senkrechten Richtung läßt sich mit einer derartig erfindungsgemäßen optisch funktionalen Grenzfläche ohne großen Aufwand eine Ablenkvorrichtung realisieren. Je nach Auftreffpunkt eines Strahls auf der optisch funktionalen Grenzfläche längs einer vorgegebenen Richtung wird der Strahl unter einem kleineren oder größeren Winkel in die dazu senkrechte Richtung abgelenkt.

Gemäß Anspruch 1 ist die optisch funktionale Grenzfläche eine tordierte, vorzugsweise propellerähnliche Fläche. Hierbei kann das Ablenkelement eine etwa quaderförmige Gestalt haben, wobei die der optisch funktionalen Grenzfläche gegenüberliegende Fläche plan ist. Bei der vorzugsweise propellerähnlichen Fläche ist eine infinitesimal kleine Fläche um einen mittig in der optisch funktionalen Grenzfläche angeordneten Punkt parallel zu der gegenüberliegenden, planen Fläche des Ablenkelements ausgerichtet. Vorteilhafterweise verlaufen in der optisch funktionalen Grenzfläche durch den etwa mittig angeordneten Punkt zwei zueinander etwa senkrecht ausgerichtete Linien, längs derer sich jeweils die lokale Neigung der optisch funktionalen Grenzfläche in Richtung der jeweiligen Linie nicht ändert, wohingegen sich längs jeder der Linien die lokale Neigung der optisch funktionalen Grenzfläche in einer zu der jeweiligen Linie senkrechten Richtung stetig ändert. Auf diese Weise wird gewährleistet, daß durch Verschiebung des Ablenkelements in eine vorgegebene Richtung der abzulenkende Strahl nur unter mehr oder weniger großem Winkel in eine zu dieser Richtung senkrechte Richtung abgelenkt wird, nicht jedoch in die Richtung, in der das Ablenkelement verschoben wird. Somit können zwei Verschiebemittel, die das Ablenkelement in zwei zueinander senkrechten Richtungen verschieben können, die Ablenkung des Strahls in zwei voneinander unabhängige Richtungen gewährleisten. Weiterhin kann durch Rotation eines derartigen erfindungsgemäßen Ablenkelements ein insbesondere beim Laserstrahlschweißen vorteilhaft einsetzbarer rotierender Fokuspunkt eines abgelenkten Laserstrahls erzeugt werden.

Gemäß Anspruch 5 hat das mindestens eine Ablenkelement eine etwa quaderförmige Gestalt, wobei zwei einander gegenüberliegende Flächen als optisch funktionale Grenzflächen ausgebildet sind. Diese optisch funktionalen Grenzflächen sind tordierte Flächen, die vorzugsweise als unter einem Winkel von 45° zu den Zylinderachsen einer konkav-konvexen Zylinderlinse mit orthogonaler Ausrichtung der Zylinderachsen aus der Zylinderlinse herausschneidbare Flächen ausgestaltet sind. Auch bei derartigen Flächen ändert sich längs einer ersten Richtung die lokale Neigung bezüglich einer im wesentlichen senkrecht dazu ausgerichteten Richtung zumindest abschnittsweise stetig. Aufgrund der Tatsache, daß es sich um tordierte Zylinderflächen handelt, ist es sinnvoll, zwei einander gegenüberliegende senkrecht zueianander tordierte Flächen zu verwenden, da dadurch Abbildungsfehler ausgeglichen werden.

Erfindungsgemäß ist das Ablenkelement mit Positioniermitteln versehen, die entweder als Verschiebemittel oder aber als Rotiermittel ausgeführt sind. Als Verschiebemittel kommen beispielsweise Piezoelemente in Frage, die das Ablenkelement in eine oder zwei zueinander senkrechte Richtungen verschieben können. Weiterhin können Rotiermittel Verwendung finden, die das Ablenkelement um eine im wesentlichen senkrecht auf der optisch funktionalen Grenzfläche stehende Achse zumindest teilweise drehen können. Zusätzlich besteht die Möglichkeit, Verschiebe- und Rotiermittel miteinander zu kombinieren, so daß die Richtungen, in die der einfallende Strahl ablenkbar ist, frei wählbar sind.

Gemäß einer bevorzugten Ausführungsform der vorliegenden Erfindung kann die Ablenkvorrichtung eine Anzahl von Ablenkelementen umfassen, die zu einem Array zusammengefaßt sind, wobei die einzelnen Ablenkelemente in jeweils gleicher Orientierung, parallel zueinander, nebeneinander liegend angeordnet sind. Eine derartige Anordnung erlaubt die gleichzeitige Ablenkung mehrerer zueinander parallel verlaufender Strahlen oder Strahlenbündel.

Gemäß einer bevorzugten Ausführungsform der vorliegenden Erfindung umfaßt die Ablenkvorrichtung mindestens eine Ablenkeinheit, wobei die oder jede der Ablenkeinheiten zwei Ablenkelemente umfaßt. Dabei entsprechen sich die optisch funktionalen Grenzflächen der Ablenkelemente der oder jeder der Ablenkeinheiten derart, daß sie zumindest abschnittsweise flächig aneinanderlegbar sind. Hierzu können beispielsweise die gesamten Ablenkelemente identisch geformt sein. Vorteilhafterweise sind in der oder jeder der Ablenkeinheiten die Ablenkelemente so angeordnet, daß deren optisch funktionale Flächen sich in Richtung des abzulenkenden Strahls oder Strahlenbündels im wesentlichen gegenüberliegen, wobei die beiden Ablenkelemente gegeneinander in einer oder zwei zueinander senkrechte Richtungen verschiebbar sind, die im wesentlichen parallel zu den optisch funktionalen Flächen ausgerichtet sind. Eine derartige Anordnung bietet den Vorteil, daß auch ausgedehnte Strahlbündel bei nicht gegeneinander verschobenen, einander direkt gegenüberliegenden Ablenkelementen die aus den beiden Ablenkelementen gebildete Ablenkeinheit unabgelenkt, allenfalls parallel verschoben, durchlaufen. Auch Strahlbündel mit sehr großem Strahlquerschnitt erfahren beim Durchlauf durch eine derartige Ablenkeinheit keine Vergrößerung ihrer Strahldivergenz. Erst durch Verschieben der Ablenkelemente gegeneinander wird eine Ablenkung beispielsweise in einer zu der Verschieberichtung senkrechten Richtung bewirkt, wobei ebenfalls die Strahldivergenz nicht erhöht wird.

Die Ablenkelemente können beispielsweise die im vorgenannten beschriebenen propellerähnlichen Flächen aufweisen.

Es besteht aber auch gemäß Anspruch 14 die Möglichkeit, daß die Ablenkvorrichtung mindestens eine Ablenkeinheit mit zwei Ablenkelementen umfaßt, die einander zugewandte optische funktionale Grenzflächen aufweisen, wobei die optisch funktionale Grenzfläche des ersten Ablenkelements parabolisch konvex und die optisch funktionale Grenzfläche des zweiten Ablenkelementes parabolisch konkav geformt ist, wobei die beiden Ablenkelemente derart gegeneinander verschiebbar sind, dass die Symmetrieachsen ihrer parabolisch geformten optisch funktionalen Grenzflächen parallel zueinander versetzt werden.

Weiterhin besteht die Möglichkeit, in den vorgenannten Ablenkeinheiten anstelle der Ablenkelemente Arrays von Ablenkelementen zu verwenden, wodurch die Möglichkeit geschaffen wird, Strahlen oder Strahlbündel mit noch größerem Querschnitt abzulenken.

Weiterhin besteht die Möglichkeit, daß die Ablenkvorrichtung zwei Ablenkeinheiten mit jeweils zwei Ablenkelementen umfaßt. Diese Ablenkeinheiten können dann im Strahlengang des abzulenkenden Strahls oder Strahlenbündels hintereinander angeordnet werden, wobei in der ersten Ablenkeinheit eine Ablenkung in einer ersten Richtung und in der zweiten Ablenkeinheit eine Ablenkung in einer zweiten, zu der ersten Richtung senkrechten Richtung, bewirkt wird. Auf diese Weise können die Ablenkungen des Strahls in zwei voneinander unabhängige Richtungen auch räumlich voneinander getrennt werden.

Gemäß einer bevorzugten Ausführungsform der vorliegenden Erfindung sind die Ablenkelemente aus für die verwendete Wellenlänge des abzulenkenden elektromagnetischen Strahls oder Strahlenbündels zumindest teilweise transparentem Material, wie beispielsweise Quarz oder Glas, gefertigt. Alternativ dazu kann die optisch funktionale Grenzfläche mit einer für die verwendete Wellenlänge des abzulenkenden elektromagnetischen Strahls oder Strahlenbündels zumindest teilweise reflektierenden Verspiegelung versehen, vorzugsweise mit entsprechendem Material, wie beispielsweise Gold, bedampft und somit in Reflexion zur Strahlablenkung genutzt werden.

Anspruch 24 sieht vor, daß die Ablenkvorrichtung eine Ablenkeinheit umfaßt, die aus zwei Ablenkelementen besteht wobei das erste der Ablenkelemente als bikonvexe Zylinderlinse und das zweite der Ablenkelemente als plankonvexe Zylinderlinse ausgeführt ist, wobei die plane optisch funktionale Grenzfläche der zweiten Zylinderlinse einer der konvexen optisch funktionalen Grenzflächen der ersten Zylinderlinse im wesentlichen gegenüberliegt und wobei die Zylinderachsen der Zylinderlinsen leicht gegeneinander verkippt sind. Durch Verschieben der aus den beiden Zylinderlinsen bestehenden Ablenkeinheiten beispielsweise in einer Richtung senkrecht zum einfallenden Strahl, kann der Strahl bzw. das Strahlenbündel nach oben oder nach unten abgelenkt werden. Aufgrund der Tatsache, daß drei Zylinderflächen als optisch funktionale Grenzflächen verwendet werden, werden etwaige Abbildungsfehler korrigiert.

Weitere Vorteile und Merkmale der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine perspektivische Ansicht eines erfindungsgemäßen Ablenkelements;
- Fig. 2: eine perspektivische Ansicht eines erfindungsgemäßen Arrays aus Ablenkelementen gemäß Fig. 1;
- Fig. 3a: eine Hintenansicht eines erfindungsgemäßen Ablenkelements gemäß Fig. 1 mit darauf auftreffenden Lichtstrahlen;
- Fig. 3b: eine Ansicht gemäß dem Pfeil IIIb in Fig. 3a;
- Fig. 3c: eine Ansicht gemäß dem Pfeil IIIc in Fig. 3a;
- Fig. 4a: eine Hintenansicht eines erfindungsgemäßen Ablenkelements, das rotierbar gestaltet ist;
- Fig. 4b: eine Ansicht gemäß dem Pfeil IVb in Fig. 4a;
- Fig. 4c: eine Ansicht gemäß dem Pfeil IVc in Fig. 4b;
- Fig. 5a: eine Draufsicht auf eine erfindungsgemäße Ablenkeinheit, die aus zwei erfindungsgemäßen Ablenkelementen besteht;
- Fig. 5b: eine schematische Verdeutlichung des Strahlengangs dreier ausgewählter Lichtstrahlen durch die Ablenkeinheit gemäß Fig. 5a;
- Fig. 6a: eine Draufsicht auf die Ablenkeinheit gemäß Fig. 5a mit gegeneinander verschobenen Ablenkelementen;
- Fig. 6b: eine schematische Verdeutlichung des Strahlengangs zweier ausgewählter Lichtstrahlen durch die Anordnung gemäß Fig. 6a;
- Fig. 7a: eine Draufsicht auf die Ablenkeinheit gemäß Fig. 5a mit gegeneinander verschobenen Ablenkelementen;
- Fig. 7b: eine schematische Verdeutlichung des Strahlengangs ausgewählter Lichtstrahlen durch die Anordnung gemäß Fig. 7a;
- Fig. 8a: eine Draufsicht auf eine andere Ausführungsform einer erfindungsgemäßen Ablenkeinheit;
- Fig. 8b: eine Ansicht gemäß dem Pfeil VIIIb in Fig. 8a;
- Fig. 9a: eine teilweise geschnittene Draufsicht auf eine erfindungsgemäße Ablenkeinheit, die vier Ablenkelemente aufweist;
- Fig. 9b: eine teilweise geschnittene Ansicht gemäß dem Pfeil IXb in Fig. 9a;
- Fig. 9c: eine Ansicht gemäß dem Pfeil IXc in Fig. 9b,
- Fig. 10: eine Draufsicht auf eine Ablenkeinheit, die aus zwei Arrays von Ablenkelementen besteht;
- Fig. 11: eine perspektivische Ansicht einer konkav-konvexen Zylinderlinse mit orthogonaler Ausrichtung der Zylinderachsen, aus der eine weitere Ausführungsform eines erfindungsgemäßes Ablenkelements herausgeschnitten werden kann;
- Fig. 12: eine perspektivische Ansicht einer weiteren Ausführungsform eines erfindungsgemäßen Ablenkelements, das aus der in Fig. 11 abgebildeten Zylinderlinse herausschneidbar ist;
- Fig. 13: eine perspektivische Ansicht einer weiteren Ausführungsform einer erfindungsgemäßen Ablenkeinheit;
- Fig. 14: eine Ansicht gemäß dem Pfeil XIV in Fig. 13.

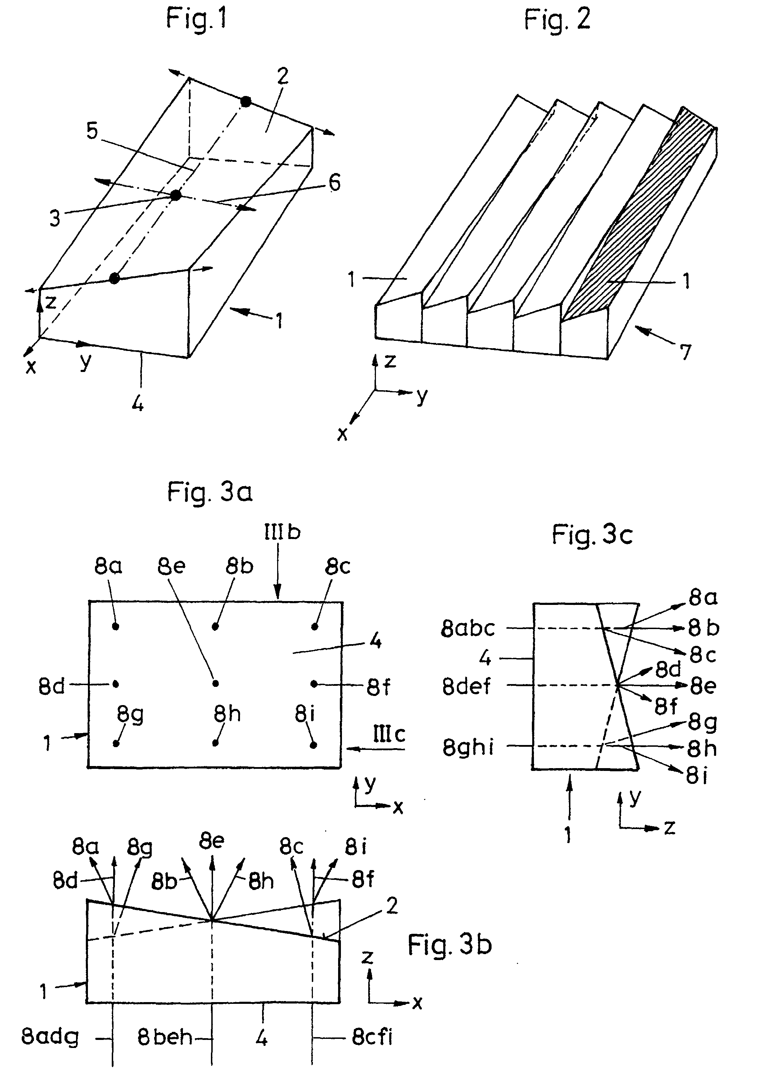

Aus Fig. 1 ist ein erfindungsgemäßes Ablenkelement 1 ersichtlich, das eine im wesentlichen quaderförmige Gestalt mit einer in Fig. 1 oberen in sich tordierten Fläche 2 aufweist, die als optisch funktionale Grenzfläche Verwendung finden kann. Zur besseren Verdeutlichung ist jeder der Abbildungen ein zwei- oder dreidimensionales Koordinatensystem x, y, z beigefügt. Die tordierte Fläche 2 weist etwa in ihrer Mitte einen Punkt 3 auf, der sich dadurch auszeichnet, daß eine infinitesimal kleine Fläche um ihn herum parallel zu der der Fläche 2 gegenüberliegenden Fläche 4 ausgerichtet ist. Ein in z-Richtung in einem dem Punkt 3 gegenüberliegenden Punkt auf die Fläche 4 auftreffender Lichtstrahl, insbesondere Laserstrahl, wird aus dem Ablenkelement 1 durch den Punkt 3 unabgelenkt hindurchtreten.

Innerhalb der Fläche 2 erstreckt sich durch den Punkt 3 in x-Richtung eine Linie 5 konstanter z-Werte. Infinitesimal kleine Flächen um diese Linie 5 herum weisen zwar längs der Linie 5 unterschiedliche Neigungen in y-Richtung jedoch keinerlei Neigung in x-Richtung auf. Weiterhin erstreckt sich innerhalb der Fläche 2 in y-Richtung durch den Punkt 3 eine zur Linie 5 senkrechte Linie 6 konstanter z-Werte. Infinitesimal kleine Flächen um die Linie 6 herum weisen zwar eine sich längs der Linie 6 stetig ändernde Neigung in x-Richtung, jedoch keinerlei Neigung in der y-Richtung auf. Jede andere infinitesimal kleine Fläche außerhalb der Linien 5, 6 der tordierten Fläche 2 ist sowohl in x-Richtung als auch in y-Richtung geneigt.

Eine tordierte Fläche 2 wie in Fig. 1 abgebildet, kann man sich beispielsweise dadurch entstanden denken, daß die obere Fläche eines Quaders an ihrer in Fig. 1 vorderen, sich in y-Richtung erstreckenden Kante im Gegenuhrzeigersinn und an ihrer in Fig. 1 hinteren, sich in y-Richtung erstreckenden Kante im Uhrzeigersinn verdreht wird. Punkte längs der Linie 6, die sich parallel zur vorderen und hinteren oberen Kante in y-Richtung etwa in deren Mitte erstreckt, werden nicht mit verdreht. Die tordierte Fläche 2 hat somit eine gewisse Ähnlichkeit mit der Oberfläche eines Propellers. Während die in Fig. 1 vordere Kante mit zunehmenden y-Werten zunehmende z-Werte aufweist, weist die in Fig. 1 hintere Kante mit zunehmenden y-Werten abfallende z-Werte auf. Die in Fig. 1 rechte Kante der tordierten Fläche 2 weist mit zunehmenden x-Werten zunehmende z-Werte auf, wohingegen die in Fig. 1 linke Kante mit zunehmenden x-Werten abnehmende z-Werte aufweist.

Die zwischen der tordierten Fläche 2 und der dieser gegenüberliegenden, planen Fläche 4 des Ablenkelements 1 angeordneten vier Seitenflächen sind jeweils ungleichschenklig trapezförmig ausgebildet, wobei jeweils die zwischen den Flächen 2, 4 verlaufenden Seitenkanten parallel ausgerichtet sind, in z-Richtung verlaufen und somit die parallel zueinander verlaufenden Seiten dieser Trapeze bilden. Von den nicht zueinander parallelen Seiten jedes der Trapeze stehen die jeweils die Fläche 4 umrandenden Kanten jeweils senkrecht auf den Seitenkanten.

Das abgebildete Ausführungsbeispiel eines erfindungsgemäßen Ablenkelements 1 ist langgestreckt ausgeführt, wobei seine Abmessungen in x-Richtung größer sind als die in y-Richtung. Ebenso besteht die Möglichkeit, die Abmessungen in x-Richtung und y-Richtung gleich groß zu wählen.

Aus Fig. 2 ist ein erfindungsgemäßes Array 7 von Ablenkelementen 1 ersichtlich, das im Prinzip aus einer Vielzahl von parallel zueinander und nebeneinander liegenden Ablenkelementen 1 gebildet ist.

In Fig. 3 wird der Strahlengang von ausgewählten Lichtstrahlen 8a bis 8i, insbesondere Laserstrahlen beschrieben. Die Lichtstrahlen 8a bis 8i fallen in z-Richtung auf die der tordierten Fläche 2 gegenüberliegende plane Fläche 4 des Ablenkelements 1. Aus Fig. 3a sind die Auftreffpunkte der Lichtstrahlen 8a bis 8i ersichtlich. Aus den Ansichten von oben bzw. von der Seite in Fig. 3b und Fig. 3c ist ersichtlich, wie die einzelnen Lichtstrahlen 8a bis 8i durch den Austritt aus der tordierten Fläche 2 nach oben bzw. nach unten sowie nach links bzw. nach rechts abgelenkt werden. Wie bereits im vorgenannten zu Fig. 1 erläutert, werden die längs der Linie 5 einfallenden Lichtstrahlen 8d, e, f beim Austritt aus der tordierten Fläche 2 nicht in x-Richtung, also nicht nach links oder nach rechts in Fig. 3b abgelenkt. Ebenso werden die längs der Linie 6 einfallenden Lichtstrahlen 8b, e, h beim Austritt aus der tordierten Fläche 2 nicht in y-Richtung, also nicht nach oben oder nach unten in Fig. 3c abgelenkt. Es zeigt sich jedoch, daß außerhalb der Linien 5, 6 einfallende Lichtstrahlen 8a, c, g, i beim Austreten aus der tordierten Fläche 2 sowohl in x- als auch in y-Richtung abgelenkt werden.

Eine erfindungsgemäße Ablenkvorrichtung kann beispielsweise dadurch erstellt werden, daß ein im vorgenannten beschriebenes Ablenkelement 1 beispielsweise mit einem Antrieb versehen wird, der ein Verfahren in x- und in y-Richtung ermöglicht. Dies kann beispielsweise durch eine handelsübliche Piezoverstellvorrichtung erzielt werden. Ein beispielsweise bei nicht in x- und/oder y-Richtung verschobenem Ablenkelement in dem Punkt 3 gegenüberliegenden Punkt einfallender Lichtstrahl 8e kann dadurch in x-Richtung abgelenkt werden, daß das erfindungsgemäße Ablenkelement 1 nach oben oder nach unten in y-Richtung verfahren wird und der Lichtstrahl somit beispielsweise an Stellen auf die Fläche 4 auftrifft, die den in Fig. 3a dargestellten Auftreffpunkten der Lichtstrahlen 8b und 8h entsprechen.

Eine Ablenkung eines auftreffenden Lichtstrahls in y-Richtung kann dadurch erzielt werden, daß das Ablenkelement 1 in x-Richtung verfahren wird, so daß ein ursprünglich etwa mittig auftreffender Lichtstrahl beispielsweise an Punkten, an denen die Lichtstrahlen 8d und 8f in Fig. 3a auftreffen, auftrifft.

Eine derartige Ablenkvorrichtung eignet sich insbesondere für Lichtstrahlen mit einem relativ kleinen Querschnitt, weil Strahlen mit einem vergleichsweise großen Strahlquerschnitt durch sich deutlich voneinander unterscheidende Bereiche der tordierten Fläche 2 hindurch treten würden, wodurch ein derartiger Strahl nach Durchtritt durch die Fläche 2 stark divergent wäre.

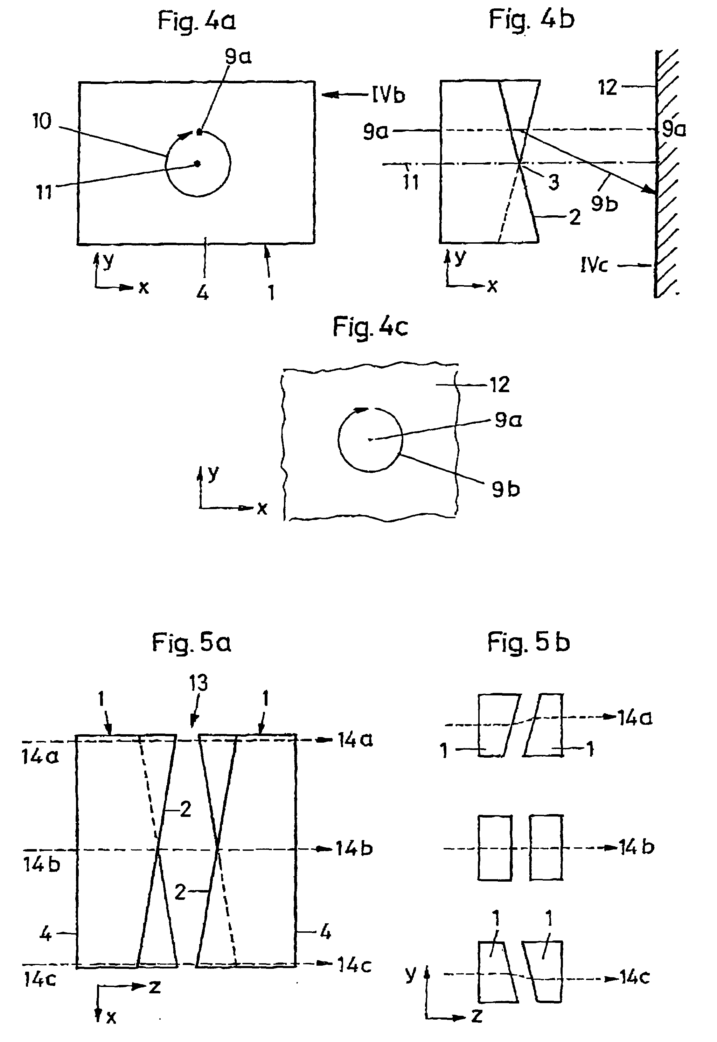

In Fig. 4 ist verdeutlicht, wie ein beispielsweise etwas oberhalb des dem Punkt 3 gegenüberliegenden Punkts auf die Fläche 4 eines Ablenkelements 1 auftreffender Lichtstrahl 9a abgelenkt wird, wenn das gesamte Ablenkelement wie durch den Kreispfeil 10 angedeutet, um eine Achse 11 rotiert, die sich in x-Richtung erstreckt und durch den Punkt 3 hindurchgeht. Der abgelenkte Strahl 9b soll dabei beispielsweise auf eine schematisch in Fig. 4b und Fig. 4c angedeutete Wand 12 auftreffen. Wie aus Fig. 4c ersichtlich ist, beschreibt der auf die Wand auftreffende Strahl 9b einen Kreis entsprechend der Rotation des Ablenkelements 1, wobei der Mittelpunkt dieses Kreises durch den schematisch angedeuteten unabgelenkten einfallenden Strahl 9a gebildet wird.

Es besteht weiterhin die Möglichkeit, die zu Fig. 3 und Fig. 4 geschilderten Ablenkvorrichtungen miteinander zu kombinieren, so daß beispielsweise nach Drehung des Ablenkelements 1 um einen bestimmten Winkel ein Verfahren des Ablenkelements 1 durch beispielsweise Piezoelemente in zueinander senkrechte Richtungen eine Ablenkung eines einfallenden Lichtstrahls in Richtungen x', y' bewirkt, die gegenüber den ursprünglichen Koordinaten x, y um den durch Rotation des Ablenkelements 1 erzielten Winkel verdreht sind. Eine Kombination der Drehbewegung des Ablenkelements 1 und der linearen Verschiebung in zwei zueinander senkrechten Richtungen ermöglicht somit eine beliebige vielseitige Ablenkung auf das Ablenkelement 1 einfallender Lichtstrahlen.

Aus den Fig. 5 bis Fig. 7 ist eine Ausführungsform einer erfindungsgemäßen Ablenkvorrichtung ersichtlich, die auch das Ablenken von Strahlen mit größerem Querschnitt ermöglicht. Die darin abgebildete Ablenkvorrichtung umfaßt eine Ablenkeinheit 13, die aus zwei Ablenkelementen 1 besteht. Die beiden Ablenkelemente 1 sind so angeordnet, daß ihre tordierten Flächen 2 einander zugewandt sind, wobei ihre jeweiligen den tordierten Flächen 2 gegenüberliegenden Flächen 4 parallel zueinander ausgerichtet sind. In der in Fig. 5a abgebildeten Ausgangsstellung der Ablenkeinheit 13 sind die beiden Ablenkelemente 1 so zueinander ausgerichtet, daß sie lediglich in z-Richtung voneinander beabstandet sind. Die beiden Ablenkelemente 1 kann man sich der Einfachheit halber dadurch hergestellt denken, daß ein Quader längs der den beiden Ablenkelementen 1 gemeinsamen tordierten Fläche 2 in zwei Teile gespalten wurde. Daran anschließend wurden die beiden Teile längs der z-Richtung ein Stück weit voneinander entfernt.

In Fig. 5a sind auf eine der beiden planen Flächen 4 auftreffende Lichtstrahlen 14a, b, c eingezeichnet, die die Ablenkeinheit 13 unabgelenkt durchlaufen. Aus Fig. 5b, die schematisch den Durchtritt der einzelnen Strahlen 14a, b, c durch die Ablenkeinheit 13 zeigt, ist ersichtlich, daß die Stahlen 14a, c in y-Richtung zwar etwas parallel versetzt zum einfallenden Strahl 14a, c aus dem in Fig. 5b rechten Ablenkelement 1 austreten, sich jedoch weiterhin exakt in z-Richtung bewegen.

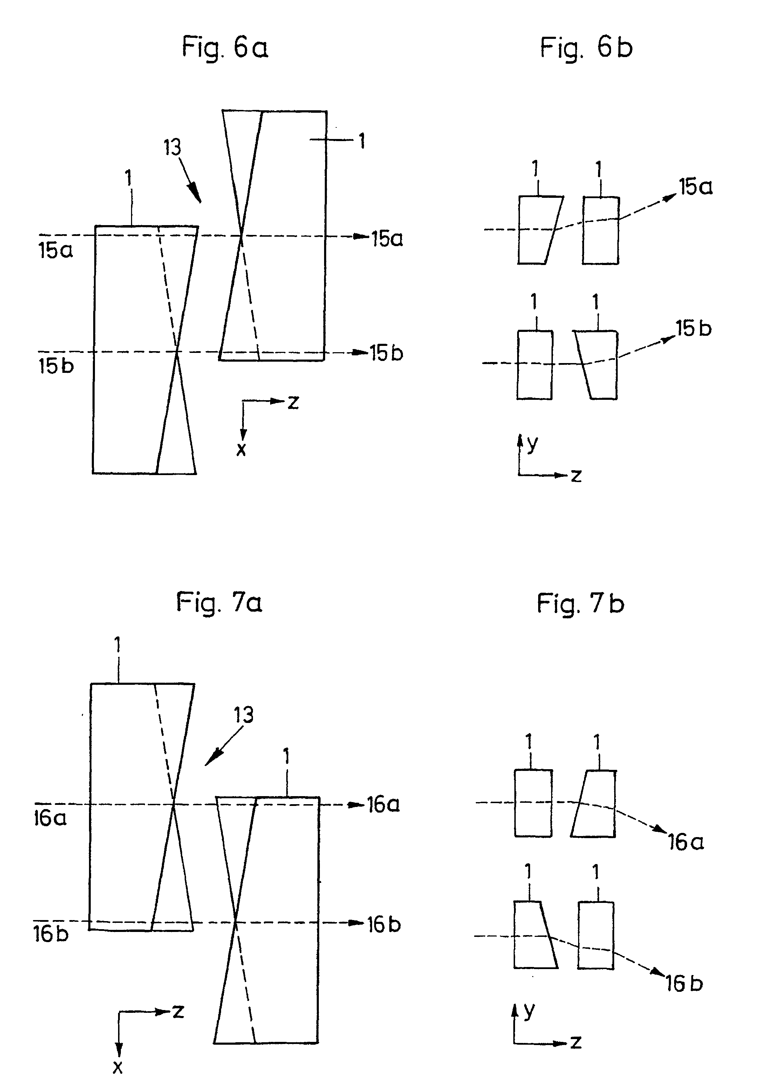

Aus Fig. 6 und Fig. 7 ist jeweils ersichtlich, daß eine Verschiebung der Ablenkelemente 1 gegeneinander in x-Richtung eine Ablenkung der einfallenden Strahlen 15a, b bzw. 16a, b in positiver bzw. negativer y-Richtung bewirkt. Die parallel auf die Ablenkeinheit 13 auftreffenden Strahlen 15a, b bzw. 16a, b verlaufen auch nach der Ablenkung parallel zueinander. Wie auch in den Ausführungsformen zu den Fig. 3 und Fig. 4 können auch hier die einzelnen Ablenkelemente 1 linear gegeneinander durch Piezoelemente oder dergleichen verfahren werden. Es besteht weiterhin die Möglichkeit, die in Fig. 5 bis Fig. 7 abgebildeten Ablenkelemente 1 sowohl in x-Richtung als auch in y-Richtung gegeneinander verfahrbar zu gestalten.

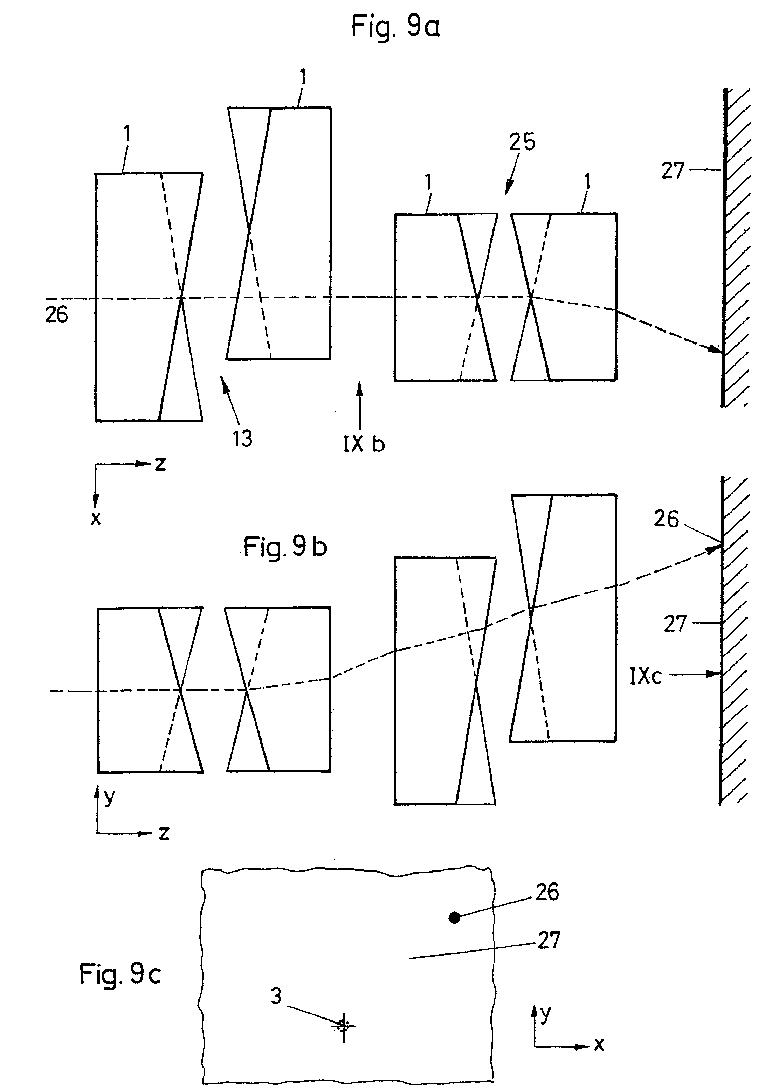

Aus Fig. 8 ist eine weitere Ausführungsform einer erfindungsgemäßen Ablenkeinheit 17 ersichtlich. Die Ablenkeinheit 17 umfaßt ein erstes Ablenkelement 18, das eine plane in Fig. 8a links angeordnete Eintrittsfläche 19 in der x-y-Ebene und eine dieser in z-Richtung gegenüberliegende konvexe, parabolisch geformte Fläche 20 umfaßt. Die Ablenkeinheit 17 umfaßt weiterhin ein zweites Ablenkelement 21, dessen dem ersten Ablenkelement 18 zugewandte Fläche 22 konkav, parabolisch geformt ist. Die dieser Fläche 22 gegenüberliegende Fläche 23 in z-Richtung befindet sich wiederum in der x-y-Ebene und ist plan gefertigt. Wie bei dem Ausführungsbeispiel zu den Fig. 5 bis Fig. 7 entsprechen sich auch in dem Ausführungsbeispiel in Fig. 8 die beiden einander zugewandten parabolischen Flächen 20, 22 so, als ob ein kubischer Körper längs dieser Flächen 20, 22 gespalten worden wäre, wobei nach dem Spalten die beiden Teile in z-Richtung voneinander beabstandet wurden.

Ein etwa mittig auf die plane Eintrittsfläche 19 des ersten Ablenkelements 18 auftreffender Strahl 24 wird, wie dies aus Fig. 8a ersichtlich ist, die Ablenkeinheit 17 unabgelenkt passieren. Wenn wie in Fig. 8b abgebildet, das zweite Ablenkelement 21 gegenüber dem ersten Ablenkelement 18 beispielsweise in x-Richtung verschoben ist, wird der Strahl 24 ebenfalls in x-Richtung abgelenkt. Eine derartige Ablenkeinheit 17 eignet sich zwar für relativ große Strahlquerschnitte, nicht jedoch für große Ablenkungen, weil zum einen aufgrund der relativ nah aneinanderliegenden parabolischen Flächen 20, 22 eine Verschiebung der Ablenkelemente 18, 21 gegeneinander nur über sehr kurze Distanzen möglich ist. Weiterhin würde bei stark gegeneinander verschobenen Ablenkelementen 18, 21 aufgrund der parabolischen Oberflächen 20, 22 ein linear mit der Verschiebung der Ablenkelemente 18, 21 anwachsender Ablenkwinkel des Strahls 24 nicht erzielbar sein.

Aus Fig. 9 ist eine weitere erfindungsgemäße Ablenkvorrichtung ersichtlich, die zwei Ablenkeinheiten 13, 25 aus jeweils zwei langgestreckten Ablenkelementen 1 umfaßt. Die Ablenkeinheiten 13, 25 sind senkrecht zueinander ausgerichtet, so daß durch Verschieben der Ablenkelemente 1 der ersten Ablenkeinheit 13 in ihren Längsrichtungen gegeneinander ein einfallender Strahl 26 in y-Richtung und durch Verschieben der Ablenkelemente 1 der zweiten Ablenkeinheit 25 in ihren Längsrichtungen gegeneinander ein einfallender Strahl 26 in x-Richtung abgelenkt werden kann. Aus Fig. 9c ist ersichtlich, wie ein zur Verdeutlichung auf eine Wand 27 auftreffender Lichtstrahl 26 von seiner ursprünglichen Richtung, die schematisch durch den Punkt 3 des in z-Richtung ersten Ablenkelements 1 verdeutlicht ist, sowohl in x-, als auch in y-Richtung abgelenkt ist.

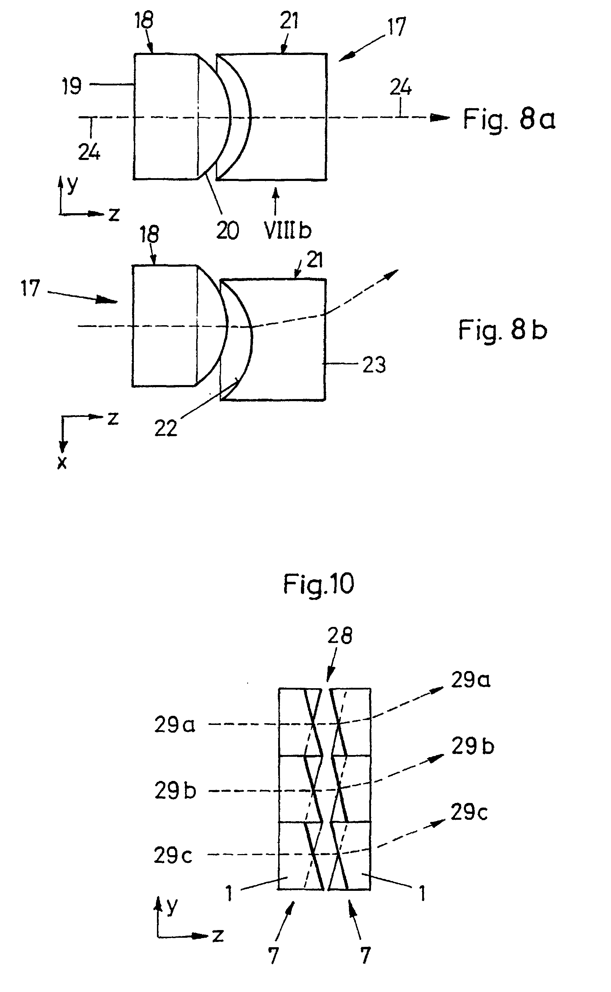

Aus Fig. 10 ist eine Ausführungsform einer erfindungsgemäßen Ablenkvorrichtung ersichtlich, die eine Ablenkeinheit 28 aufweist, die aus zwei Arrays 7 von Ablenkelementen 1 besteht. Die beiden Arrays 7 sind in x-Richtung gegeneinander verschoben, so daß auf das erste Array 7 auftreffende parallele Strahlen 29a, b, c durch die Ablenkeinheit 28 in y-Richtung parallel zueinander abgelenkt werden. Durch Verwendung derartiger gegeneinander in x- oder y-Richtung verschiebbarer Arrays 7 können auch Strahlen mit sehr großem Querschnitt problemlos beliebig abgelenkt werden.

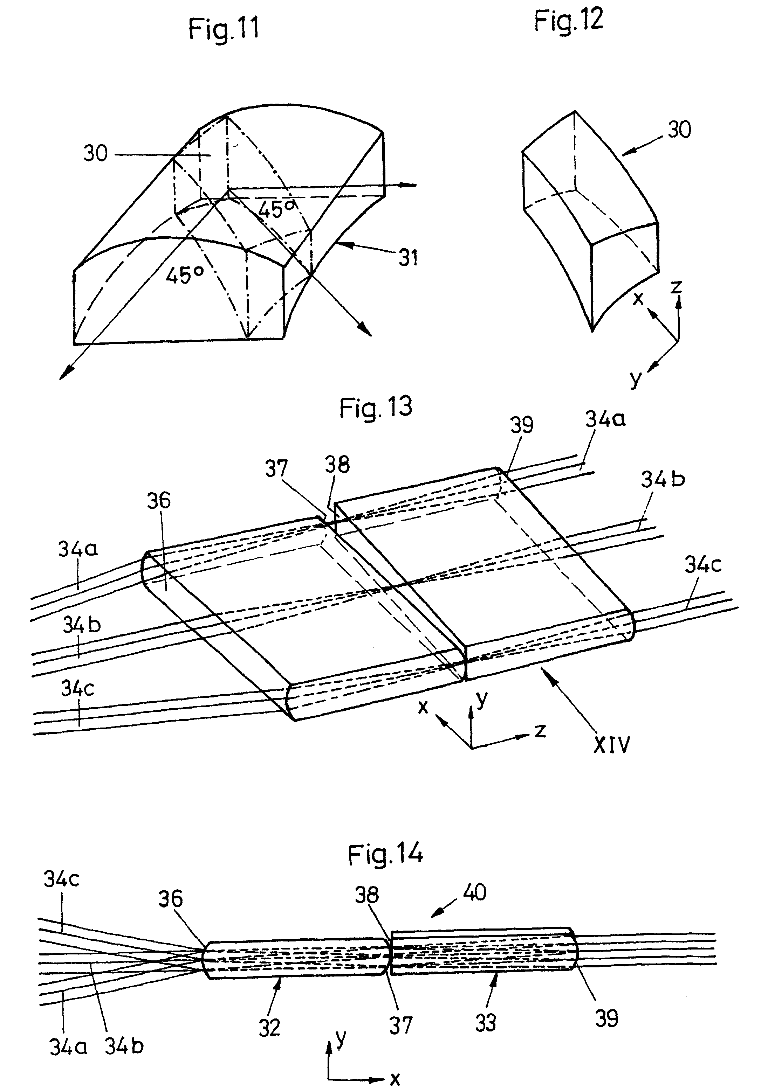

Aus Fig. 12 ist ein weiteres erfindungsgemäßes Ablenkelement 30 ersichtlich. Das erfindungsgemäße Ablenkelement 30 kann beispielsweise aus einer konkav-konvexen Zylinderlinse 31 mit orthogonaler Ausrichtung der Zylinderachsen herausgeschnitten werden. Dies ist in Fig. 11 verdeutlicht, wo gezeigt ist, daß das Ablenkelement 30 obere Längskanten aufweist, die in einem Winkel von 45° zu den Zylinderachsen der Zylinderlinse 31 ausgerichtet sind. Aufgrund der Geometrie des Ablenkelements 30 verhält sich dieses optisch sehr ähnlich wie das Ablenkelement 1, das eine tordierte, optisch funktionale Fläche 2 aufweist. Bei dem Ablenkelement 30 wird der Ablenkeffekt dadurch verstärkt, daß die in Fig. 12 in z-Richtung gegenüberliegenden Flächen beide als optisch funktionale Grenzflächen Verwendung finden können. Es besteht auch die Möglichkeit, die Ablenkelemente 30 zu Arrays von Ablenkelementen 30 zusammenzufassen.

Aus Fig. 13 und Fig. 14 ist eine weitere Ausführungsform einer erfindungsgemäßen Ablenkeinheit 40 ersichtlich. Die Ablenkeinheit besteht aus zwei Zylinderlinsen 32, 33, von denen eine als bikonvexe Zylinderlinse 32 mit optisch funktionalen Grenzflächen 36, 37 und die andere als plankonvexe Zylinderlinse 33 mit optisch funktionalen Grenzflächen 38, 39 ausgebildet ist. Wie aus Fig. 13 und Fig. 14 ersichtlich ist, sind die beiden Zylinderlinsen 32, 33 so angeordnet, daß eine der optisch funktionalen Grenzflächen 37 der ersten Zylinderlinse 32 im wesentlichen längs der planen optisch funktionalen Grenzfläche 38 der zweiten Zylinderlinse 33 verläuft. Die erfindungsgemäße Ablenkfunktion wird dadurch erzielt, daß die Zylinderlinse 33 etwas aus der x-z-Ebene heraus gekippt ist, so daß die in Fig. 13 die aneinanderliegenden optisch aktiven Grenzflächen 37, 38 begrenzenden oberen Kanten der Zylinderlinsen 32, 33 beispielsweise einen Winkel von etwa 5° bis 10° gegeneinander aufweisen.

In Fig. 13 und in Fig. 14 sind Parallelstrahlenbündel 34a, b, c abgebildet, die von rechts, das heißt in relativer z-Richtung auf die in den Fig. 13 und Fig. 14 rechte optisch funktionale Grenzfläche 39 der Zylinderlinse 33 einfallen. Es ist ersichtlich, daß durch die Zylinderfläche 39 die abgebildeten Strahlenbündel 34a, b, c auf die gegenüberliegenden plane Grenzfläche 38 fokussiert werden.

Die aus der Grenzfläche 38 austretenden Strahlenbündel treten in die Zylinderfläche 37 derart ein, daß die drei Fokuspunkte der Strahlenbündel 34a, b, c auf einer Linie liegen, die gegenüber der Zylinderachse der Zylinderfläche 37 um einen Winkel verkippt ist, der dem Winkel zwischen den beiden Zylinderlinsen 32, 33 entspricht. Da die Brennweite der Zylinderfläche 36 dem Abstand zwischen der Zylinderfläche 36 und der Zylinderfläche 37 entspricht, verlassen die Strahlenbündel 34a, b, c die Zylinderfläche 36 in negativer z-Richtung als jeweils in sich parallele Strahlenbündel. Aufgrund der Tatsache, daß die Foki dieser Strahlenbündel 34a, b, c auf der gegenüberliegenden Zylinderfläche 37 auf einer zur Zylinderachse schräg liegenden Linie ausgerichtet sind, weisen die seitlichen, nicht durch die Zylinderachse der Fläche 37 hindurch getretenen Strahlenbündel 34a, c eine Strahlkomponente in positiver oder negativer y-Richtung auf. Dies ist aus Fig. 13 und Fig. 14 ersichtlich.

Die Ablenkeinheit 40 kann also dadurch als Ablenkeinheit verwendet werden, daß sie in positiver oder negativer y-Richtung gegenüber dem einfallenden Strahl als Ganzes verschoben wird und dementsprechend eine Ablenkung der einfallenden Strahlen 34a, b, c in positiver oder negativer y-Richtung bewirkt. Es besteht auch die Möglichkeit, die Ablenkeinheit 40 zu Arrays von Ablenkeinheiten 40 zusammenzufassen.

Gemäß den vorbeschriebenen Ausführungsformen wurde die Ablenkung von Lichtstrahlen jeweils durch eine gekrümmte Fläche 2, 20, 22, 36, 37, 39 bewirkt, durch die Lichtstrahlen hindurchtraten. Es besteht aber auch die Möglichkeit, derartige Flächen in Reflexion bei entsprechender Anordnung zu verwenden.

Erfindungsgemäß lassen sich mit den vorbeschriebenen Ablenkvorrichtungen elektromagnetische Strahlen oder Strahlenbündel des optischen Spektralbereichs ablenken. Damit sind Wellenlängen vom VUV bis zum FIR gemeint, die eine Ablenkung durch Brechung und / oder Reflexion zulassen.

## Patentansprüche

1. Ablenkvorrichtung für elektromagnetische Strahlen oder Strahlbündel im optischen Spektralbereich, insbesondere für Laserstrahlen, umfassend mindestens ein Ablenkelement (1, 18, 21, 30, 32, 33) mit mindestens einer optisch funktionalen Grenzfläche (2, 20, 22, 36, 37, 38, 39), die durch Brechung oder Reflexion die Ablenkung eines auf sie auftreffenden Strahls (8a - i; 9; 14a - c; 15a, b; 16a, b; 24; 26; 29a - c) oder Strahlenbündels (34 a - c) bewirken kann, wobei die Ablenkvorrichtung Positioniermittel umfaßt, die als Verschiebemittel oder als Rotiermittel ausgeführt sind und mit denen die optisch funktionale Grenzfläche (2, 20, 22) relativ zum Strahl (8a - i; 9; 14a - c; 15a, b; 16a, b; 24; 26; 29a - c) oder Strahlenbündel positionierbar ist, **dadurch gekennzeichnet, daß** die optisch funktionale Grenzfläche (2) eine tordierte Fläche ist, die propellerähnlich geformt ist, wobei die Ablenkvorrichtung mindestens zwei Verschiebemittel umfasst, die das mindestens eine Ablenkelement (1) in zwei zueinander senkrechten Richtungen (x, y) verschieben können, die vorzugsweise etwa senkrecht zur Richtung (z) des abzulenkenden Strahls (8a -i; 9) oder Strahlenbündels ausgerichtet sind, oder wobei mit den Rotationsmitteln das mindestens eine Ablenkelement (1) um eine etwa parallel zur Richtung des abzulenkenden Strahls (9a) verlaufenden Achse (11) herum zumindest teilweise drehbar ist.

2. Ablenkvorrichtung nach Anspruch 1, **dadurch gekennzeichnet, daß** das mindestens eine Ablenkelement (1, 18, 21) eine etwa quaderförmige Gestalt hat, wobei die der optisch funktionalen Grenzfläche (2, 20, 22) gegenüberliegende Grenzfläche (4, 19, 23) plan ist.

3. Ablenkvorrichtung nach Anspruch 2, **dadurch gekennzeichnet, daß** eine infinitesimal kleine Fläche um einen etwa mittig in der optisch funktionalen Grenzfläche (2) angeordneten Punkt (3) parallel zu der gegenüberliegenden, planen Grenzfläche (4) des Ablenkelements (1) ausgerichtet ist.

4. Ablenkvorrichtung nach Anspruch 3, **dadurch gekennzeichnet, daß** in der optisch funktionalen Grenzfläche (2) durch den etwa mittig angeordneten Punkt (3) zwei zueinander etwa senkrecht ausgerichtete Linien (5, 6) verlaufen, längs derer sich jeweils die lokale Neigung der optisch funktionalen Grenzfläche (2) in Richtung der jeweiligen Linie (5, 6) nicht ändert, wohingegen sich längs jeder der Linien (5, 6) die lokale Neigung der optisch funktionalen Grenzfläche (2) in einer zu der jeweiligen Linie (5, 6) senkrechten Richtung stetig ändert.

5. Ablenkvorrichtung nach dem Oberbegriff des Anspruchs 1, **dadurch gekennzeichnet, daß** das mindestens eine Ablenkelement (30) eine etwa quaderförmige Gestalt hat, wobei zwei einander gegenüberliegende Flächen als optisch funktionale Grenzflächen ausgebildet sind, wobei die einander gegenüberliegenden optisch funktionalen Grenzflächen tordierte Flächen sind, die als unter einem Winkel von 45° zu den Zylinderachsen einer konkav-konvexen Zylinderlinse (31) mit orthogonaler Ausrichtung der Zylinderachsen aus der Zylinderlinse (31) herausschneidbare Flächen ausgestaltet sind.

6. Ablenkvorrichtung nach Anspruch 5, **dadurch gekennzeichnet, daß** die Positioniermittel Verschiebemittel umfassen, die mit dem mindestens einen Ablenkelement (1, 18, 21, 30) verbunden sind, wobei die Verschiebemittel eine Verschiebung des mindestens einen Ablenkelements (1, 18, 21, 30) bewirken können, um die Ablenkung des Strahls (8a - i; 9; 14a - c; 15a, b; 16a, b; 24; 26; 29a - c) oder Strahlenbündels zu verändern.

7. Ablenkvorrichtung nach Anspruch 6, **dadurch gekennzeichnet, daß** die Verschiebung des Ablenkelements (1, 18, 21, 30) in einer Richtung (x, y) erfolgen kann, die etwa senkrecht zu der Richtung (z) des abzulenkenden Strahls (8a - i; 9; 14a - c; 15a, b; 16a, b; 24; 26; 29a - c) oder Strahlenbündels ausgerichtet ist.

8. Ablenkvorrichtung nach einem der Ansprüche 1 bis 7, **dadurch gekennzeichnet, daß** als Verschiebemittel Piezoelemente Verwendung finden.

9. Ablenkvorrichtung nach einem der Ansprüche 6 bis 8, **dadurch gekennzeichnet, daß** die Ablenkvorrichtung mindestens zwei Verschiebemittel umfaßt, die das mindestens eine Ablenkelement (1, 18, 21, 30) in zwei zueinander senkrechten Richtungen (x, y) verschieben können, die vorzugsweise etwa senkrecht zur Richtung (z) des abzulenkenden Strahls (8a - i; 9; 14a - c; 15a, b; 16a, b; 24; 26; 29a - c) oder Strahlenbündels ausgerichtet sind.

10. Ablenkvorrichtung nach einem der Ansprüche 6 bis 9, **dadurch gekennzeichnet, daß** die Ablenkvorrichtung genau ein Ablenkelement (1, 30) umfaßt, das mit zwei Verschiebemitteln zur Verschiebung in zwei zueinander senkrechten Richtungen (x, y) versehen ist.

11. Ablenkvorrichtung nach Anspruch 5, **dadurch gekennzeichnet, daß** die Positioniermittel Rotationsmittel umfassen, mit denen das mindestens eine Ablenkelement (1, 30) um eine Achse (11) herum zumindest teilweise drehbar ist.

12. Ablenkvorrichtung nach einem der Ansprüche 1 bis 11, **dadurch gekennzeichnet, daß** die Ablenkvorrichtung eine Anzahl von Ablenkelementen (1, 30) umfaßt, die zu einem Array (7) zusammengefaßt sind, wobei die einzelnen Ablenkelemente (1, 30) in jeweils gleicher Orientierung, parallel zueinander, nebeneinander liegend angeordnet sind.

13. Ablenkvorrichtung nach Anspruch 12, **dadurch gekennzeichnet, daß** das Array (7) von Ablenkelementen (1, 30) mit Verschiebemitteln ausgestattet ist, die ein Verschieben des Arrays (7) in zwei zueinander senkrechten Richtungen (x, y) erlauben.

14. Ablenkvorrichtung nach dem Oberbegriff des Anspruchs 1, **dadurch gekennzeichnet, daß** die Ablenkvorrichtung mindestens eine Ablenkeinheit (17) mit zwei Ablenkelementen (18, 21) umfaßt, die einander zugewandte optische funktionale Grenzflächen (20, 22) aufweisen, wobei die optisch funktionale Grenzfläche (20) des ersten Ablenkelements (18) parabolisch konvex und die optisch funktionale Grenzfläche (22) des zweiten Ablenkelementes (21) parabolisch konkav geformt ist, wobei die beiden Ablenkelemente (18, 21) derart gegeneinander verschiebbar sind, dass die Symmetrieachsen ihrer parabolisch geformten optisch funktionalen Grenzflächen (20, 22) parallel zueinander versetzt werden.

15. Ablenkvorrichtung nach einem der Ansprüche 1 bis 13, **dadurch gekennzeichnet, daß** die Ablenkvorrichtung mindestens eine Ablenkeinheit (13, 17, 25, 28) umfaßt, wobei die oder jede der Ablenkeinheiten zwei Ablenkelemente (1, 18, 21, 30) umfaßt.

16. Ablenkvorrichtung nach einem der Ansprüche 14 oder 15, **dadurch gekennzeichnet, daß** die optisch funktionalen Grenzflächen (2, 20, 22) der Ablenkelemente (1, 18, 21, 30) der oder jeder der Ablenkeinheiten (13, 17, 25, 28) sich derart entsprechen, daß sie zumindest abschnittsweise flächig aneinanderlegbar sind.

17. Ablenkvorrichtung nach einem der Ansprüche 15 oder 16, **dadurch gekennzeichnet, daß** die Ablenkelemente (1, 30) der oder jeder der Ablenkeinheiten (13, 25, 28) jeweils identisch geformt sind.

18. Ablenkvorrichtung nach einem der Ansprüche 16 oder 17, **dadurch gekennzeichnet, daß** in der oder jeder der Ablenkeinheiten (13, 17, 25, 28) die Ablenkelemente (1, 18, 21, 30) so angeordnet sind, daß deren optisch funktionale Grenzflächen (2, 20, 22) sich in Richtung (z) des abzulenkenden Strahls (8a - i; 9; 14a - c; 15a, b; 16a, b; 24; 26; 29a - c) oder Strahlenbündels im wesentlichen gegenüberliegen.

19. Ablenkvorrichtung nach Anspruch 18, **dadurch gekennzeichnet, daß** eines oder beide der Ablenkelemente (1, 18, 21, 30) mit sich im wesentlichen gegenüberliegenden optisch funktionalen Grenzflächen (2, 20, 22) mit Verschiebemitteln versehen sind, so daß die beiden Ablenkelemente (1, 18, 21, 30) gegeneinander in einer oder zwei zueinander senkrechten Richtungen (x, y) verschiebbar sind, die im wesentlichen parallel zu den optisch funktionalen Grenzflächen (2, 20, 22) ausgerichtet sind.

20. Ablenkvorrichtung nach einem der Ansprüche 14 bis 19, **dadurch gekennzeichnet, daß** die Ablenkvorrichtung zwei Ablenkeinheiten (13, 17, 25, 28) mit jeweils zwei Ablenkelementen (1, 18, 21, 30) umfaßt.

21. Ablenkvorrichtung nach einem der Ansprüche 15 bis 20, **dadurch gekennzeichnet, daß** in den Ablenkeinheiten (13, 25, 28) anstelle von Ablenkelementen (1, 30) Arrays (7) von Ablenkelementen (1, 30) Verwendung finden.

22. Ablenkvorrichtung nach einem der Ansprüche 1 bis 21, **dadurch gekennzeichnet, daß** die Ablenkelemente (1, 18, 21, 30) aus für die verwendete Wellenlänge des abzulenkenden elektromagnetischen Strahls (8a - i; 9; 14a - c; 15a, b; 16a, b; 24; 26; 29a - c) oder Strahlenbündels zumindest teilweise transparentem Material, beispielsweise aus Quarz oder Glas, gefertigt sind.

23. Ablenkvorrichtung nach einem der Ansprüche 1 bis 22, **dadurch gekennzeichnet, daß** die optische funktionale Grenzfläche mit einer für die verwendete Wellenlänge des abzulenkenden elektromagnetischen Strahls (8a - i; 9; 14a - c; 15a, b; 16a, b; 24; 26; 29a - c) oder Strahlenbündels zumindest teilweise reflektierenden Verspiegelung versehen, vorzugsweise mit entsprechendem Material, wie beispielsweise Gold, bedampft ist.

24. Ablenkvorrichtung nach dem Oberbegriff des Anspruchs 1, **dadurch gekennzeichnet, daß** die Ablenkvorrichtung eine Ablenkeinheit (40) umfaßt, die aus zwei Ablenkelementen (32, 33) besteht, wobei das erste der Ablenkelemente als bikonvexe Zylinderlinse (32) und das zweite der Ablenkelemente als plankonvexe Zylinderlinse (33) ausgeführt ist, wobei die plane optisch funktionale Grenzfläche (38) der zweiten Zylinderlinse (33) einer der konvexen optisch funktionalen Grenzflächen (38) der ersten Zylinderlinse (32) im wesentlichen gegenüberliegt und wobei die Zylinderachsen der Zylinderlinsen (32, 33) leicht gegeneinander verkippt sind.

25. Ablenkvorrichtung nach Anspruch 24, **dadurch gekennzeichnet, daß** die Ablenkvorrichtung Verschiebemittel umfaßt, die eine gleichzeitige Verschiebung beider Zylinderlinsen (32, 33) bewirken können, um die Ablenkung des Strahls oder des Strahlenbündels (34 a - c) zu verändern, wobei die Verschiebung der Zylinderlinsen (32, 33) vorzugsweise in einer Richtung (x) erfolgen kann, die etwa senkrecht zu der Richtung (z) des abzulenkenden Strahls oder Strahlenbündels (34 a - c) ausgerichtet ist.

26. Ablenkvorrichtung nach Anspruch 25, **dadurch gekennzeichnet, daß** als Verschiebemittel Piezoelemente Verwendung finden.

## Claims

1. Device for redirecting electromagnetic beams or ray bundles in the optical spectrum range, in particular for laser beams, comprising at least one deflecting element (1, 18, 21, 30, 32, 33) with at least one optically functional interface (2, 20, 22, 36, 37, 38, 39), that cause the redirection of a beam (8a - i; 9; 14a - c; 15a, b; 16a, b; 24; 26; 29a - c) or a ray bundle (34 a - c) , striking the said deflecting element by refraction or reflection and where the said redirecting device includes positioning devices, that are realized as displacement means or as rotational devices and with which the optically functional interfaces (2, 20, 22) can be positioned relative to the beam (8a - j; 9; 14a - c; 15a, b; 16a, b; 24; 26; 29a - c) or to ray bundles, **characterized in that** the optically functional interface (2) is a propeller-like bent surface, wherein the deflecting device includes at least two displacement means, that can displace at least one deflecting element (1) in two mutually vertical directions (x, y), that are preferably oriented roughly vertical to the direction (z) of the beam (8a -i; 9) or ray bundle to be deflected, or rotational devices with which at least one deflecting element (1) can be at least partially rotated around an axis (11) roughly parallel to the direction of the beam to be deflected (9a).

2. The redirecting device according to claim 1, **characterized in that** at least one deflecting element (1, 18, 21) has a generally quadratic shape whereby an interface (4, 19, 23) opposite from the said optically functional interface (2, 20, 22) is flat.

3. The redirecting device according to claim 2, **characterized in that** an infinitesimal small area in the vecinity of a point (3) roughly in the center of the optically functional interface (2) and has an orientation parallel to the plane surface (4) of the deflecting element (1) opposite to it.

4. The redirecting device according to claim 3, **characterized in that** in an optically functional interface (2) run two lines (5, 6) oriented roughly vertical to one another through the point (3) arranged roughly in its centre, along each of these lines the local inclination of the optically functional interface (2) does not change in the direction of the respective line (5, 6) while, along each line (5, 6) the local inclination of the optically functional interface (2) in a vertical direction to the corresponding line (5, 6) varies continuously.

5. The redirecting device according to the preamble of claim 1, **characterized in that** at least one deflecting element (30) has roughly a quadradic shape, in which two surfaces opposite to each other are shaped as optically functional interfaces, whereby the optically functional interfaces opposite to each other are bent surfaces, that are designed as surfaces which can be cut out of the cylindrical lens (31) under an angle of 45° to the cylinder axises of a concave-convexe cylindrical lens (31) with orthogonal orientation of the cylinder axises.

6. The redirecting device according to claim 5, **characterized in that** the positioning means include displacement means that are connected to at least one deflecting element (1, 18, 21, 30), wherein the displacement means can cause a displacement of at least one deflecting element (1, 18, 21, 30), in order to change deflection of the beam (8a - i; 9; 14a - c; 15a, b; 16a, b; 24; 26; 29a - c) or ray bundle.

7. The redirecting device according to claim 6, **characterized in that** the displacement of the deflecting element (1, 18, 21, 30) can be realized in a direction (x, y), that is oriented roughly vertical to the direction (z) of the beam (8a - i; 9; 14a - c; 15a, b; 16a, b; 24; 26; 29a - c) or ray bundle to be deflected.

8. The redirecting device according to one of the claims 1 to 7, **characterized in that** piezoelectric devices are used as displacement devices.

9. The redirecting device according to one of the claims 6 to 8, **characterized in that** the redirecting device includes at least two displacement devices that allow a displacement of at least one deflecting element (1, 18, 21, 30) in two mutually vertical directions (x, y), these displacement devices being arranged preferably roughly vertical to the direction (z) of the beam to be deflected (8a - i; 9; 14a - c; 15a, b; 16a, b; 24; 26; 29a - c) or ray bundle.

10. The redirecting device according to one of the claims 6 to 9, **characterized in that** the redirecting device comprises exactly one deflecting element (1, 30), that is provided with two displacement devices for displacement into two mutually vertical directions (x, y).

11. The redirecting device according to claim 5, **characterized in that** the positioning devices comprises rotation devices, by means of which at least one deflecting element (1, 30) allows rotation partially around an axis (11).

12. The redirecting device according to one of the claims 1 to 11, **characterized in that** the redirecting device comprises a number of deflecting elements (1, 30), that are combined into an array (7), whereby the individual deflecting elements (1, 30) are each arranged side-by-side, parallel to one another in the same orientation.

13. The redirecting device according to claim 12, **characterized in that** the array (7) of the said deflecting elements (1, 30) are equipped with displacement devices, that allow a displacment of the said array (7) in two mutually vertical directions (x, y).

14. The redirecting device according to the preamble of claim 1, **characterized in that** the said redirecting device comprises at least one deflection unit (17) with two deflecting elements (18, 21), provided with optically functional interfaces (20, 22) facing each other, whereby the optically functional interface (20) of the first deflecting element (18) is parabolically convex and the optically functional interface (22) of the second deflecting element (21) is parabolically concave shaped, so that both deflecting elements (18, 21) can be displaced relative to one another in such a way that the symmetrical axes are displaced parallel to their parabolic fashioned optically functional interfaces (20, 22).

15. The redirecting device according to one of the claims 1 to 13, **characterized in that** the redirecting device includes at least one deflection unit (13, 17, 25, 28), wherein one or each of the deflection units comprises two deflecting elements (1, 18, 21, 30).

16. The redirecting device according to one of the claims 14 or 15, **characterized in that** the optically functional interfaces (2, 20, 22) of the deflecting elements (1, 18, 21, 30) corresponding to one or each of the deflection units (13, 17, 25, 28) so that they can, at least segment-wise, be laid flat against each other.

17. The redirecting device according to one of the claims 15 or 16, **characterized in that** the deflecting elements (1, 30) of one or each of the said deflection units (13, 25, 28) has the respective identical shape.

18. The redirecting device according to one of the claims 16 or 17, **characterized in that** in one or each of the deflection units (13, 17, 25, 28) the deflecting elements are arranged (1, 18, 21, 30) in such a way, that their optically functional interfaces (2, 20, 22) are essentially opposite to the direction (z) of the beam to be deflected (8a - i; 9; 14a - c; 15a, b; 16a, b; 24; 26; 29a - c) or ray bundle.

19. The redirecting device according to claim 18, **characterized in that** one or both deflecting elements (1, 18, 21, 30) with optically functional interfaces (2, 20, 22) each essentially opposite to one another, are provided with displacement devices, so that both deflecting elements (1, 18, 21, 30) can be mutually displaced relative to one another in one or two vertical directions (x, y), oriented essentially parallel to the optically functional interfaces (2, 20, 22).

20. The redirecting device according to one of the claims 14 to 19, **characterized in that** the redirecting device comprises two deflection units (13, 17, 25, 28) each with two deflecting elements (1, 18, 21, 30).

21. The redirecting device according to one of the claims 15 to 20, **characterized in that** in the deflection units (13, 25, 28) instead of deflecting elements (1, 30) arrays (7) of deflecting elements (1, 30) are used.

22. The redirecting device according to one of the claims 1 to 21, **characterized in that** the deflecting elements (1, 18, 21, 30) are prepared from material that is at least partially transparent, for example quartz or glass, to the wavelength of the electromagnetic beam to be deflected (8a - i; 9; 14a - c; 15a, b; 16a, b; 24; 26; 29a - c) or ray bundle.

23. The redirecting device according to one of the claims 1 to 22, **characterized in that** the optically functional interface is provided with a mirroring that is at least partially reflective to the wavelengths employed for the electromagnetic beam (8a - i; 9; 14a - c; 15a, b; 16a, b; 24; 26; 29a - c) or ray bundle to be deflected, being preferably vacuum metallized with corresponding material, for example gold.

24. The redirecting device according to the preamble of claim 1, **characterized in that** the redirecting device comprises one deflection unit (40), that consists of two deflecting elements (32, 33), wherein the first deflecting element is realized as biconvex cylindrical lens (32) and the second deflecting element is as plano-convex cylindrical lens (33), whereby the plane optically functional interface (38) faces essentially the second cylindrical lens (33) of one of the convex optically functional interfaces (38) of the first cylindrical lens (32) and whereby the cylinder axises of the cylindrical lenses (32, 33) are slightly tilted against one another.

25. The redirecting device according to claim 24, **characterized in that** the redirecting device comprises displacement devices, that can cause (33) a simultaneous displacement of both cylindrical lenses (32), in order to change deviation of the beam or ray bundle (34 a - c), whereby the displacement of the cylindrical lenses (32, 33) preferably can take place in one direction (x), oriented roughly perpendicular to the direction (z) of the beam or ray bundle (34 a - c) to be deviated.

26. Redirecting device according to claim 25, **characterized in that** piezoelectric devices are used as displacement devices.

## Revendications

1. Dispositif de déflexion pour des rayons électromagnétiques ou des faisceaux de rayon dans la région spectrale optique, en particulier pour des rayons lasers, comprenant au moins un élément de déflexion (1, 18, 21, 30, 32, 33) avec au moins une interface optiquement fonctionnelle (2, 20, 22, 36, 37, 38, 39), qui par réfraction ou réflexion peut provoquer la déviation d'un rayon (8a - i; 9; 14a - c; 15a, b; 16a, b; 24; 26; 29a - c) ou faisceau de rayons incidents (34 a - c), le dispositif de déflexion comprenant des dispositifs de positionnement qui sont réalisés comme moyen de déplacement ou comme des moyens de rotation et avec lesquels l'interface optiquement fonctionnelle (2, 20, 22) est positionnable relativement vers le rayon (8a - i; 9; 14a - c; 15a, b; 16a, b; 24; 26; 29a - c) ou vers le faisceaux de rayons, **caractérisé en ce que** l'interface optiquement fonctionnelle (2) est une surface tordue, qui a une forme d'hélice, le dispositif de déflexion comprenant au moins deux moyens de déplacement lesquels sont capables de déplacer au moins un élément de déflexion (1) mutuellement vers deux directions verticales l'une vers l'autre (x, y), qui sont préférablement orientés approximativement perpendiculairement en direction (z) du rayon (8a -i; 9) ou faisceau de rayons à dévier, ou qu'au moins un élément de déflexion (1) avec les moyens de rotation peut être tourné au moins partiellement autour de l'axe (11) qui s'étend presque parallèlement en direction du rayon à dévier (9a).

2. Dispositif de déflexion selon la revendication 1, **caractérisé en ce qu'**au moins un élément de déflexion (1, 18, 21) a une configuration presque en forme de parallélépipède, où l'interface (4, 19, 23) opposée a l'interface optiquement fonctionnelle (2, 20, 22) est plane.

3. Dispositif selon la revendication 2, **caractérisé en ce qu**'une petite surface infinitésimale est orientée vers un point (3) disposé approximativement au centre de l'interface optiquement fonctionnelle (2) orientée parallèlement à l'interface opposé plane (4) de l'élément de déflexion (1).

4. Dispositif de déflexion selon la revendication 3, **caractérisé en ce que** dans une interface optiquement fonctionnelle (2) passent deux lignes (5) orientées presque verticalement l'une vers l'autre (6) traversant le point (3) disposé presque au centre, le long desquelles la respective inclinaison locale de l'interface optiquement fonctionnelle (2) ne varie pas en direction de la respective ligne (5, 6), alors que le long de chacune des lignes (5 6) l'inclinaison locale de l'interface optiquement fonctionnelle (2) varie continuellement en direction verticale à la ligne respective (5, 6).

5. Dispositif de déflexion selon le terme générique de la revendication 1, **caractérisé en ce qu'**au moins un élément de déflexion (30) a une configuration approximativement en forme de parallélépipède, où deux surfaces opposées l'une à l'autre sont formées d'interfaces fonctionnelles optiques, et les interfaces optiquement fonctionnelles opposées sont des surfaces tordues, qui sont configurées comme des surfaces coupées sous un angle de 45° vers les axes cylindriques d'une lentille cylindrique convexe concave (31) avec un alignement orthogonal des axes cylindriques à partir de la lentille cylindrique (31).

6. Dispositif de déflexion selon la revendication 5, **caractérisé en ce que** les moyens de positionnement comprennent des moyens de déplacement, qui sont reliés au moins à un élément de déflexion (1, 18, 21, 30), les moyens de déplacement permettant un déplacement d'au moins un élément de déflexion (1, 18, 21, 30), pour changer la déviation du rayon (8a - i; 9; 14a - c; 15a, b; 16a, b; 24; 26; 29a - c) ou faisceau de rayons.

7. Dispositif de déflexion selon la revendication 6, **caractérisé en ce que** le déplacement de l'élément de déflexion (1, 18, 21, 30) peut se réaliser en direction (x, y), orienté presque perpendiculairement en direction (z) du rayon (8a - i; 9; 14a - c; 15a, b; 16a, b; 24; 26; 29a - c) ou faisceau de rayons à dévier.

8. Dispositif de déflexion selon une des revendications 1 à 7, **caractérisé en ce que** des éléments piézoélectriques peuvent être utilisés comme moyen de déplacement.

9. Dispositif de déflexion selon une des revendications 6 à 8, **caractérisé en ce que** le dispositif de déflexion comprend au moins deux moyens de déplacement qui sont capables de déplacer au moins un élément de déflexion (1, 18, 21, 30) dans deux directions verticales l'une vers l'autre (x, y), qui sont préférablement orientés de manière presque perpendiculaire en direction (z) du rayon (8a - i; 9; 14a - c; 15a, b; 16a, b; 24; 26; 29a - c) ou faisceau de rayons à dévier.

10. Dispositif de déflexion selon une des revendications 6 à 9, **caractérisé en ce que** le dispositif de déflexion comprend précisément un élément de déflexion (1, 30), qui est pourvu de deux moyens de déplacement pour se déplacer dans deux directions verticales l'une vers l'autre (x, y).

11. Dispositif de déflexion selon la revendication 5, **caractérisé en ce que** les moyens de positionnement comprennent des moyens de rotation, avec lesquels au moins l'un des élément de déflexion (1, 30) peut se pivoter au moins partiellement autour d'un axe (11).

12. Dispositif de déflexion selon une des revendications 1 à 11, **caractérisé en ce que** le dispositif de déflexion comprend un nombre d'éléments de déflexion (1, 30) qui sont réunis dans un ensemble (7), où disposer les différents éléments de déflexion (1, 30) sont disposés dans une même orientation respectivement, parallèlement l'une vers l'autre et l'une à côté de l'autre.

13. Dispositif de déflexion selon la revendication 12, **caractérisé en ce que** l'ensemble (7) d'éléments de déflexion (1, 30) est muni de moyens de déplacement qui permettent un déplacement de l'ensemble (7) dans deux directions verticales l'une vers l'autre (x, y).

14. Dispositif de déflexion selon le terme générique de la revendication 1, **caractérisé en ce que** le dispositif de déflexion comprend au moins une unité de déflexion (17) avec deux éléments de déflexion (18, 21), qui présentent des interfaces optiquement fonctionnelles (20, 22) orientées l'une vers l'autre, où l'interface optiquement fonctionnelle (20) du premier élément de déflexion (18) a une forme parabolique convexe et l'interface optiquement fonctionnelle (22) du second élément de déflexion (21) a une forme parabolique et concave, où les deux éléments de déflexion (18, 21) sont réciproquement déplaçables de telle manière que les axes symétriques de leurs interfaces optiquement fonctionnelles (20 22) paraboliques se déplacent parallèlement l'une vers l'autre.

15. Dispositif de déflexion selon une des revendications 1 à 13, **caractérisé en ce que** le dispositif de déflexion comprend au moins une unité de déflexion (13, 17, 25, 28), où l'une des unités de déflexion ou chacune des unités de déflexion comprenne deux éléments de déflexion (1, 18, 21, 30).

16. Dispositif de déflexion selon une des revendications 14 ou 15, **caractérisé en ce que** les interfaces optiquement fonctionnelles (2, 20, 22) des éléments de déflexion (1, 18, 21, 30) correspondent aux unités de déflexion ou à chacune des unités de déflexion (13, 17, 25, 28) de telle manière qu'elles peuvent être adossées superficiellement au moins partiellement.

17. Dispositif de déflexion selon une des revendications 15 ou 16, **caractérisé en ce que** les éléments de déflexion (1, 30) d'une ou de chacune des unités de déflexion (13, 25, 28) ont toutes une forme similaire respectivement.

18. Dispositif de déflexion selon une des revendications 16 ou 17, **caractérisé en ce que** dans une ou chacune des unités de déflexion (13, 17, 25, 28) les éléments de déflexion (1, 18, 21, 30) sont disposés de telle manière que leurs interfaces optiquement fonctionnelles (2, 20, 22) sont essentiellement opposées en direction (z) du rayon (8a - i; 9; 14a - c; 15a, b; 16a, b; 24; 26; 29a - c) ou faisceau de rayons à dévier.

19. Dispositif de déflexion selon la revendication 18, **caractérisé en ce qu'**un ou deux des éléments de déflexion (1, 18, 21, 30) avec des interfaces optiquement fonctionnelles (2, 20, 22) essentiellement opposées sont munis de moyens de déplacement, de sorte que les deux éléments de déflexion (1, 18, 21, 30) sont mutuellement déplaçables dans une ou deux directions verticales l'une vers l'autre (x, y), qui sont orientés essentiellement parallèlement aux interfaces optiquement fonctionnelles (2, 20, 22).

20. Dispositif de déflexion selon une des revendications 14 à 19, **caractérisé en ce que** le dispositif de déflexion comprend deux unités de déflexion (13, 17, 25, 28) respectivement avec deux éléments de déflexion (1, 18, 21, 30).

21. Dispositif de déflexion selon une des revendications 15 à 20, **caractérisé en ce que** dans les unités de déflexion (13, 25, 28) au lieu des éléments de déflexion (1, 30) sont utilisés des ensembles (7) d'éléments de déflexion (1, 30).

22. Dispositif de déflexion selon une des revendications 1 à 21, **caractérisé en ce que** les éléments de déflexion (1, 18, 21, 30) sont fabriqués avec au moins un matériel partiellement transparent, par exemple le quartz ou verre pour la longueur d'ondes du rayon électromagnétique (8a - i; 9; 14a - c; 15a, b; 16a, b; 24; 26; 29a - c) ou faisceau de rayons à dévier.

23. Dispositif de déflexion selon une des revendications 1 à 22, **caractérisé en ce que** l'interface optiquement fonctionnelle est munie d'au moins un miroir partiellement réflecteur, étant fait de métal préférablement d'un matériel correspondant, comme par exemple l'or, pour la longueur d'ondes employée du rayon électromagnétique (8a - i; 9; 14a - c; 15a, b; 16a, b; 24; 26; 29a - c) ou faisceau de rayons à dévier.

24. Dispositif de déflexion selon le terme générique de la revendication 1, **caractérisé en ce que** le dispositif de déflexion comprend une unité de déflexion (40), qui comporte deux éléments de déflexion (32, 33), où le premier des éléments de déflexion est formé comme lentille cylindrique biconvexe (32) et le second des éléments de déflexion comme lentille cylindrique convexe plane (33), où l'interface plane optiquement fonctionnelle essentiellement opposée (38) de la seconde lentille cylindrique (33) est opposée à l'une des interfaces optiquement fonctionnelles convexes (38) de la première lentille cylindrique (32) y où les axes cylindriques des lentilles cylindriques (32, 33) sont légèrement renversés l'un contre l'autre.

25. Dispositif de déflexion selon la revendication 24, **caractérisé en ce que** le dispositif de déflexion comprend des moyens de déplacement qui peuvent provoquer un déplacement simultané des deux lentilles cylindriques (32, 33), pour changer la déviation du rayon ou du faisceau de rayons (34 a - c), où le déplacement des lentilles cylindriques (32, 33) peut se réaliser préférablement dans une direction (x), qui est orienté presque perpendiculairement en direction (z) du rayon ou du faisceau de rayons (34 a - c) à dévier.

26. Dispositif de déflexion selon la revendication 25, **caractérisé en ce que** les éléments piézoélectriques sont utilisés comme des moyens de déplacement.
